Europäisches Patentamt

European Patent Office

Office européen des brevets

(19)

(11) EP 1 351 517 A2

(12) EUROPEAN PATENT APPLICATION

(43) Date of publication:
08.10.2003 Bulletin 2003/41

(51) Int Cl.⁷: H04N 7/50, H04N 7/26

(21) Application number: 03251515.7

(22) Date of filing: 12.03.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 28.03.2002 GB 0207424

(71) Applicant: SONY UNITED KINGDOM LIMITED
Weybridge KT13 0XW (GB)

(72) Inventors:
• Porter, Robert Mark Stefan
Winchester, Hampshire SO22 5AJ (GB)
• Burns, James Edward
Basingstoke, Hampshire RG24 8YZ (GB)
• Saunders, Nicholas Ian
Hampshire RG24 0RL (GB)

(74) Representative: Turner, James Arthur et al
D. Young & Co.,
21 New Fetter Lane
London EC4A 1DA (GB)

(54) Data compression for multi-generation images

(57) A data compression apparatus operable to perform at least one trial quantisation in order to compress input data in accordance with a predetermined target output data quantity comprises a quantisation starting point estimator for detecting, from a property of the input data, a quantisation starting point representing an approximate value for a quantisation parameter suitable for achieving the predetermined target output data quantity; one or more trial quantisers, each testing a degree of quantisation of at least part of the input data, the degree of quantisation being defined by a respective trial quantisation parameter; a parameter controller for assigning a value of the trial quantisation parameter to each of the trial quantisers in dependence upon the quantisation starting point; and a parameter selector for selecting a final level of quantisation for use in compression of the input data in accordance with results of the testing performed by the one or more trial quantisers, to ensure that the target output data quantity is not exceeded.

EP 1 351 517 A2

Fig. 6

**Description**

The present invention relates to data compression.

Data compression techniques are used extensively in the data communications field in order to communicate data at bit rates that can be supported by communication channels having dynamically changing but limited bandwidths. Image data is typically compressed prior to either transmission or storage on an appropriate storage medium and it is decompressed prior to image reproduction.

In the case of still images data compression techniques take advantage of spatial redundancy, whilst for moving images both spatial and temporal redundancy is exploited. Temporal redundancy arises in moving images where successive images in a temporal sequence, particularly images belonging to the same scene, can be very similar. The Motion Picture Experts Group (MPEG) has defined international standards for video compression encoding for entertainment and broadcast applications. The present invention is relevant to (though not at all restricted to) implementations of the MPEG4 "Studio Profile" standard that is directed to high end video hardware operating at very high data rates (up to 1 Gbit/s) using low compression ratios.

Discrete Cosine Transform (DCT) Quantisation is a widely used encoding technique for video data. It is used in image compression to reduce the length of the data words required to represent input image data prior to transmission or storage of that data. In the DCT quantisation process the image is segmented into regularly sized blocks of pixel values and typically each block comprises 8 horizontal pixels by 8 vertical pixels ($8_H \times 8_V$). In conventional data formats video data typically has three components that correspond to either the red, green and blue (RGB) components of a colour image or to a luminance component Y along with two colour difference components Cb and Cr. A group of pixel blocks corresponding to all three RGB or YCbCr signal components is known as a macroblock (MB).

The DCT represents a transformation of an image from a spatial domain to a spatial frequency domain and effectively converts a block of pixel values into a block of transform coefficients of the same dimensions. The DCT coefficients represent spatial frequency components of the image block. Each coefficient can be thought of a weight to be applied to an appropriate basis function and a weighted sum of basis functions provides a complete representation of the input image. Each $8_H \times 8_V$ block of DCT coefficients has a single "DC" coefficient representing zero spatial frequency and 63 "AC" coefficients. The DCT coefficients of largest magnitude are typically those corresponding to the low spatial frequencies. Performing a DCT on an image does not necessarily result in compression but simply transforms the image data from the spatial domain to the spatial frequency domain. In order to achieve compression each DCT coefficient is divided by a positive integer known as the quantisation divisor and the quotient is rounded up or down to the nearest integer. Larger quantisation divisors result in higher compression of data at the expense of harsher quantisation. Harsher quantisation results in greater degradation in the quality of the reproduced image. Quantisation artefacts arise in the reproduced images as a consequence of the rounding up or down of the DCT coefficients. During compressed image reproduction each DCT coefficient is reconstructed by multiplying the quantised coefficient (rounded to the nearest integer), rather than the original quotient, by the quantisation step which means that the original precision of the DCT coefficient is not restored. Thus quantisation is a "lossy" encoding technique.

Image data compression systems typically use a series of trial compressions to determine the most appropriate quantisation divisor to achieve a predetermined output bit rate. Trial quantisations are carried out at, say, twenty possible quantisation divisors spread across the full available range of possible quantisation divisors. The two trial adjacent trial quantisation divisors that give projected output bit rates just above and just below the target bit rate are identified and a refined search is carried out between these two values. Typically the quantisation divisor selected for performing the image compression will be the one that gives the least harsh quantisation yet allows the target bit rate to be achieved.

Although selecting the least harsh quantisation will result in the best possible image quality (i.e. the least noisy image) on reproduction for "source" image data that has not undergone one or more previous compression/decompression cycles, it has been established that this is not necessarily the case for "non-source" image data. An image that has been compressed and decompressed once is referred to as a 1st generation image, an image that has been subject to two previous compression/decompression cycles is known as a 2nd generation and so on for higher generations.

Typically the noise in the image will be systematically higher across the full range of quantisation divisors for the 2nd generation reproduced image in comparison to the noise at a corresponding quantisation divisor for the 1st generation reproduced image. This can be understood in terms of the DCT coefficient rounding errors incurred at each stage of quantisation. However, it is known that when the 2nd generation quantisation divisor is chosen to substantially equal to that used in the 1st generation compression, the noise levels in the 2nd generation reproduced image will be substantially equal to the noise levels in the 1st generation reproduced image. Thus for non-source input image data the quantisation divisor having the smallest possible magnitude that meets a required data rate will not necessarily give the best reproduced image quality. Instead, a quantisation divisor substantially equal to that used in a previous compression/decompression cycle is likely to give the best possible reproduced image quality. Note however that the choice of quantisation divisor is constrained by the target bit rate associated with the particular communication channel which may vary from generation to generation.

A problem with known systems for establishing the best quantisation step for image compression is that a large amount of processing circuitry is required to perform the trial quantisations across a full range of possible quantisation divisors. This is a particular problem where the circuitry is to be implemented in an Application Specific Integrated Circuit (ASIC). Furthermore the quantisation step used in the compression process of a previous data compression is unlikely to be a known parameter.

This invention provides a data compression apparatus operable to perform at least one trial quantisation in order to compress input data in accordance with a predetermined target output data quantity, the apparatus comprising:

a quantisation starting point estimator for detecting, from a property of the input data, a quantisation starting point representing an approximate value for a quantisation parameter suitable for achieving the predetermined target output data quantity;
one or more trial quantisers, each testing a degree of quantisation of at least part of the input data, the degree of quantisation being defined by a respective trial quantisation parameter;
a parameter controller for assigning a value of the trial quantisation parameter to each of the trial quantisers in dependence upon the quantisation starting point; and a parameter selector for selecting a final level of quantisation for use in compression of the input data in accordance with results of the testing performed by the one or more trial quantisers, to ensure that the target output data quantity is not exceeded.

The invention addresses the problems described above by deriving an estimated quantisation starting parameter from the input data itself. Trial quantisations are then performed based around the estimated starting point. This can reduce the need to perform trial quantisations across the full range of available quantisation parameters.

Embodiments of the invention will now be described, by way of example only, with reference to the accompanying drawings in which:

Figure 1 is a schematic diagram of a compression encoder and a corresponding decoder for use with a data recording/reproducing device or a data transmission/reception system;
Figure 2 schematically illustrates the bit rate reducing encoder of Figure 1;
Figure 3 is a table of parameters used in the bit rate reduction process of the encoder of Figure 2;
Figure 4 illustrates an alternative bit rate reducing encoder to that of Figure 2;
Figure 5 schematically illustrates the decoder of Figure 1;
Figure 6 schematically illustrates a parameter estimation circuit according to an embodiment of the invention;
Figure 7 schematically illustrates a portion of the Q start estimation module of Figure 5.
Figure 8 is an example graph illustrating calculation of the error in the Q start estimation value.
Figure 9 is a flow chart showing how the final values of $Q_{\_START}$ and $DCT_{\_PRECISION}$ are selected by the parameter estimation circuit of Figure 6.
Figure 10 schematically illustrates an alternative embodiment of the parameter estimation circuit of Figure 6.
Figure 11A schematically illustrates the use of $Q_{\_START}$ in the bit allocation module of Figure 2.
Figure 11B schematically illustrates the use of $Q_{\_START}$ in the parallel bit allocation module of Figure 3.
Figure 12 schematically illustrates the use of $Q_{\_START}$ to select a subset of fixed $Q_{\_SCALE-CODES}$ during bit allocation.

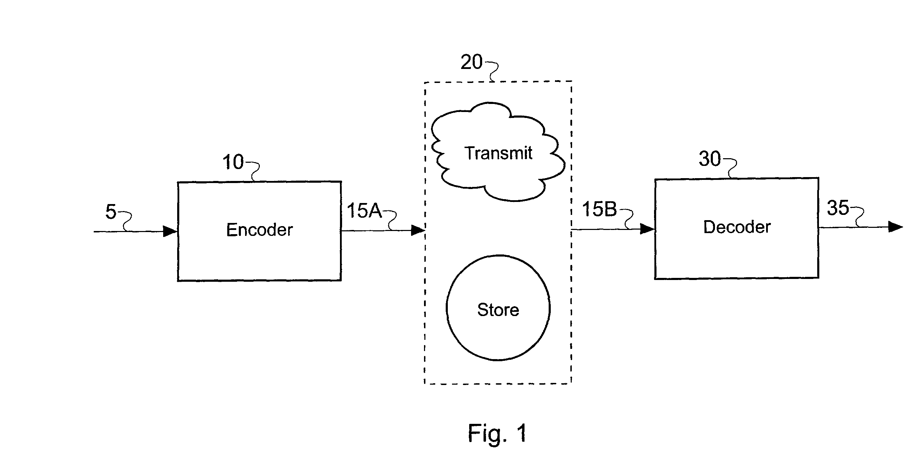

Figure 1 is a schematic diagram of a data compression system. This system comprises an encoder 10, a data processing module 20 and a decoder 30. An input high definition video signal 5 is received by the encoder 10. The encoder 10 models the video image data to remove redundancy and to exploit its statistical properties. It produces output data symbols which represent the information in the input image data 5 in a compressed format. The encoder 10 outputs a compressed data signal 15A which is supplied as input to the data processing module 20 where it is either transmitted across a communication channel or stored on a recording medium. A compressed data signal 15B that was either read from the recording medium or received across a communication network is supplied to the decoder 30 that decodes the compressed data signal 15B to form a high definition image output signal 35.

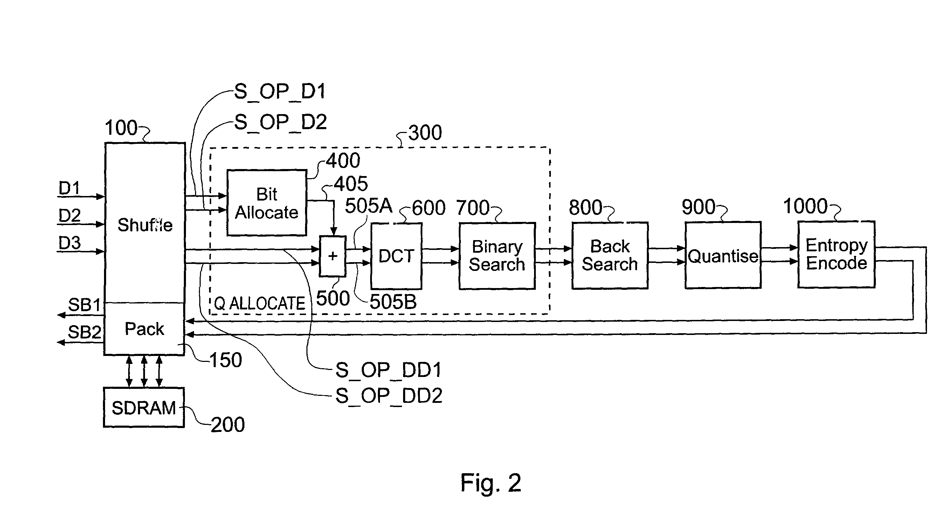

Figure 2 schematically illustrates the bit rate reducing encoder of Figure 1. Data signals D1, D2 and D3 correspond to RGB input channels for high definition video frames, which are supplied as input to a shuffle unit 100. It will be appreciated that in an alternative embodiment the data could be supplied in $YC_BC_R$ format. The images can be processed either in a progressive frame mode or in an interlaced field mode. The shuffle unit serves to distribute the input data into Macro-Block Units (MBUs). In this embodiment there are 40 MBUs per video frame, each of which comprises 204 MBs. Image samples of each input frame are temporarily written to an external SDRAM 200. During this shuffle write process the values for two quantisation divisor parameters $Q_{\_START}$ and $DCT_{\_PRECISION}$, which are required for the subsequent encoding process, are calculated. Blocks of pixels are read from the external SDRAM 200 according to a predetermined shuffle ordering that serves to interleave the image data so that blocks of pixels which are adjacent in the input image frame are not read out at adjacent positions in the shuffle ordering.

The shuffle process alleviates the effect of data losses on the image reconstructed by the decoder apparatus. Pixel blocks that are adjacent to each other in the input video frame are separated in the shuffled bit stream. A short duration data loss in which a contiguous portion of the bit stream is corrupted may affect a number of data blocks but due to the shuffling these blocks will not be contiguous blocks in the reconstructed image. Thus data concealment can feasibly be used to reconstruct the missing blocks. The shuffle process improves the picture quality during shuttle playback. It also serves to reduce the variation in the quantisation parameters selected for the MBUs in an image frame by distributing input video data pseudo-randomly in the MBUs.

A current image frame is written to the external SDRAM 200 while a previous frame is read, in shuffled format, from the external SDRAM 200. The shuffle unit 100 generates two output signal pairs: a first pair comprising signals S_OP_D1 and S_OP_D2 and a second pair comprising signals S_OP_DD1 and S_OP_DD2 which contain the same MBU data but delayed by approximately one MBU with respect to the data of the first signal pair. This delay serves to compensate for the processing delay of a bit allocation module 400 belonging to a Q allocation unit 300. The first signal pair S_OP_D1 and S_OP_D2 is used by the Q allocation unit 300 to determine an appropriate coding mode and a quantisation divisor known as a $Q_{\_SCALE}$ parameter for each MB of the MBU.

The output signals from the shuffle unit 100 are supplied to the Q allocation unit 300 that comprises the bit allocation module 400, a target insertion module 500, a DCT module 600 and a binary search module 700. The first output signal pair S_OP_D1 and S_OP_D2 from the shuffle unit 100 are supplied as input to the bit allocation module 400. The input to the bit allocation module 400 comprises raster scanned $8_H \times 8_V$ vertical blocks of 12-bit video samples.

The bit allocation module 400 performs a comparison between lossless differential pulse code modulation (DPCM) encoding and DCT quantisation encoding.

DPCM is a simple image compression technique that takes advantage of the fact that spatially neighbouring pixels in an image tend to be highly correlated. In DPCM the pixel values themselves are not transmitted. Rather, a prediction of the probable pixel value is made by the encoder based on previously transmitted pixel values. A single DPCM encoding stage involves a DPCM reformat, a DPCM transform and entropy encoding calculations.

By way of contrast, the DCT quantisation encoding involves a single DCT transform plus several stages of quantisation using a series of quantisation divisors, each quantisation stage being followed by Huffman entropy encoding calculations. In this embodiment 4 trial quantisation divisors are tested by the bit allocation module 400. Huffman coding is a known lossless compression technique in which more frequently occurring values are represented by short codes and less frequent values with longer codes. The DCT trial encoding stages optionally involve quantisation that is dependent on the "activity" of an image area. Activity is a measure calculated from the appropriately normalised pixel variance of an image block. Since harsher quantisation is known to be less perceptible to a viewer in image blocks having high activity the quantisation step for each block can be suitably adjusted according to its activity level. Taking account of activity allows for greater compression while maintaining the perceived quality of the reproduced image.

The DPCM and DCT quantisation trial encoding stages are used to calculate MB bit targets constrained by a predetermined frame target calculated from the required encoding bit rate. For each MB the mode (DCT or DPCM) that gives the fewest encoded bits is selected. The bit allocation module outputs a signal 405 to the target insertion module 500. The signal 405 comprises information about the encoding mode selected for each Macro-Block, a $Q_{\_SCALE}$ quantisation divisor $Q_{BASE}$ to be used by a binary search module 700 and a bit target for each Macro-Block. The $Q_{BASE}$ value, encoding mode information and the bit target for each Macro-Block in the signal 405 is added to the bit stream of the delayed image data to which it corresponds by the target insertion module 500. The target insertion module 500 outputs two signals 505A and 505B which are supplied as inputs to the DCT module 600.

The DCT module 600 again calculates DCT coefficients, this time based on the delayed version of the image data. The DCT module 600 outputs the data to the binary search module 700. The binary search module 700 performs a second stage of Q allocation for each of the DCT mode MBs and uses a binary search technique to determine an appropriate quantisation divisor for each Macro-Block. The binary search module 700 determines the quantisation divisor to a higher resolution (within a given range of available quantisation divisors) than the resolution used by the bit allocation module 400. In fact $Q_{BASE}$ is used to define a starting point for a five stage binary search that results in the selection of a higher resolution quantisation step $Q_{ALLOC}$ for each DCT mode Macro-Block. The DPCM mode Macro-Blocks are routed through the binary search module 700 via a bypass function so that the data is unaltered on output.

The output from the binary search module 700 that includes the value $Q_{ALLOC}$ for each DCT mode Macro-Block is supplied to a back search module 800. The back search module 800 checks that the $Q_{ALLOC}$ value chosen for each MB is the "best" quantisation scale for encoding. As explained in the introduction, for image data that has undergone at least on previous encode/decode cycle, the least harsh quantisation that is achievable for a given target bit count will not necessarily give the smallest possible quantisation error for the Macro-Block. Instead, the smallest quantisation error is likely to be achieved by using a quantisation divisor that is substantially equal to the quantisation divisor used in the previous encode/decode cycle. Accordingly, the back search module 800 estimates the quantisation error for a range of quantisation divisors starting at $Q_{ALLOC}$ and working towards harsher quantisations. It determines the quantisation step $Q_{FINAL}$ that actually produces the smallest possible quantisation error. The trial quantisations are performed on DCT mode Macro-Blocks only and a bypass function is provided for DPCM mode macroblocks.

The output from the back search module 800 which includes DCT blocks generated by the DCT encoder 600 together with the selected quantisation step $Q_{FINAL}$ is supplied to a quantiser 900 where the final quantisation is performed. The quantisation procedure is as follows:

In DCT mode encoding the single DC coefficient of each $8_H \times 8_V$ block is quantised according to the equation:

$$Q(DC) = DC / (DC_{-QUANT} * DCT_{-SCALER})$$

where DC is the unquantised coefficient, $DC_{-QUANT}$ is a quantisation factor that is set by the system and is used to quantise all of the MBs. DC_QUANT is determined from $DC_{-PRECISION}$ as shown in the table below

| $DC_{-PRECISION}$ | 00 | 01 | 10 | 11 |
|---|---|---|---|---|
| $DC_{-QUANT}$ | 8 | 4 | 2 | 1 |

DC_PRECISION is set to a fixed value, preferably 00, for each frame. $DCT_{-SCALER}$ is a quantisation factor determined by the $DCT_{-PRECISION}$ index such that $DCT_{-SCALER} = 2^{DCT\_PRECISION}$. In this embodiment a convention is used where $DCT_{-PRECISION}$ has the four possible values 0, 1, 2, 3 and 3 corresponds to the most harsh quantisation. Note that a different convention is used in the MPEG4 Studio Profile standard where DCT_PRECISION=0 corresponds to the most harsh quantisation whilst DCT_PRECISION=3 corresponds to the least harsh quantisation.

Similarly the 63 AC coefficients of the block are quantised according to the equation:

$$Q(AC) = (AC*16) / (Q_{-MATRIX}*AC_{-QUANTISE}*DCT_{-SCALER})$$

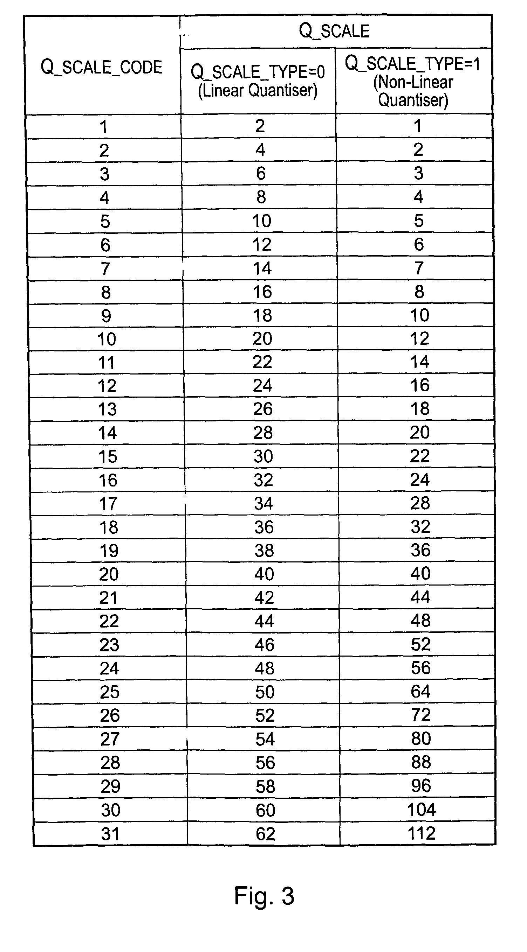

where AC is the unquantised coefficient and $Q_{-MATRIX}$ is an array of 64 weights, one for each element of the DCT block. $AC_{-QUANTISE}$ is given by the product of $Q_{-SCALE}$ and $NORM_{-ACT}$. $Q_{-SCALE}$ is a factor corresponding to either a linear quantiser scale or a non-linear quantiser scale, as specified by a $Q_{-SCALE-TYPE}$. Each of the $Q_{-SCALE-TYPE}$s comprises 31 possible values denoted $Q_{-SCALE-CODE}(1)$ to $Q_{-SCALE-CODE}(31)$. The table of Figure 3 shows the $Q_{-SCALE}$ values associated with each $Q_{-SCALE-TYPE}$ for all 31 $Q_{-SCALE-CODE}$s. In the above equation $NORM_{-ACT}$ is a normalised activity factor that lies the range 0.5 to 2.0 for "activity on" but is equal to unity for "activity off". AC_QUANTISE = NORM_ACT*Q_SCALE is rounded up to the nearest Q_SCALE (i.e. a Q_SCALE that corresponds to one of the Q_SCALE_CODES in the Table of Figure 3) before it is included as part of the divisor.

The results of the quantisations Q(DC) and Q(AC) are rounded using the known technique of normal infinity rounding. This technique involves rounding positive numbers less than 0.5 down (towards zero) and positive numbers greater than or equal to 0.5 up (towards plus infinity). Whereas negative numbers greater than -0.5 are rounded up (towards zero) and negative numbers less than or equal to -0.5 are rounded down (towards minus infinity).

The bit allocation module 400, the binary search module 700 and the back search module 800 each implement a quantisation process in accordance with that implemented by the quantise module 900 as detailed above. However in the binary search module 700 and the back search module 800 the factor NORM_ACT is always set equal to 1. Only during the bit allocation process carried out by the bit allocation module 400, does NORM_ACT take a value other than 1. Since the MB targets generated during bit allocation take account of activity, it need not be taken into account at subsequent stages.

The quantised data are output from the quantise module 900 and are subsequently supplied to an entropy encoder 1000 where lossless data compression is applied according to the standard principles of entropy encoding. In this embodiment Huffman encoding is used

The output from the entropy encoder 1000 is supplied to a packing module 150 within the shuffle unit 100. The packing module 150 together with the external SDRAM 200 is used to pack the variable length encoded data generated by the entropy encode module 1000 into fixed length sync-blocks. A sync-block is the smallest data block that is separately recoverable during reproduction of the image.

The packing function is implemented by manipulation of the SDRAM read and write addresses. Each MBU is allocated a fixed packing space in the SDRAM which is then subdivided into a nominal packing space for each MB. The total length of each MB must also be stored and this can either be calculated from the individual word lengths or passed directly from the entropy encode module 1000 to the packing module 150. The output from the encoder 10 comprises sync-block 1 data output SB1 and sync-block 2 data output SB2. An indication of the quantisation divisors used in the encoding process is also transmitted to the decoder 30.

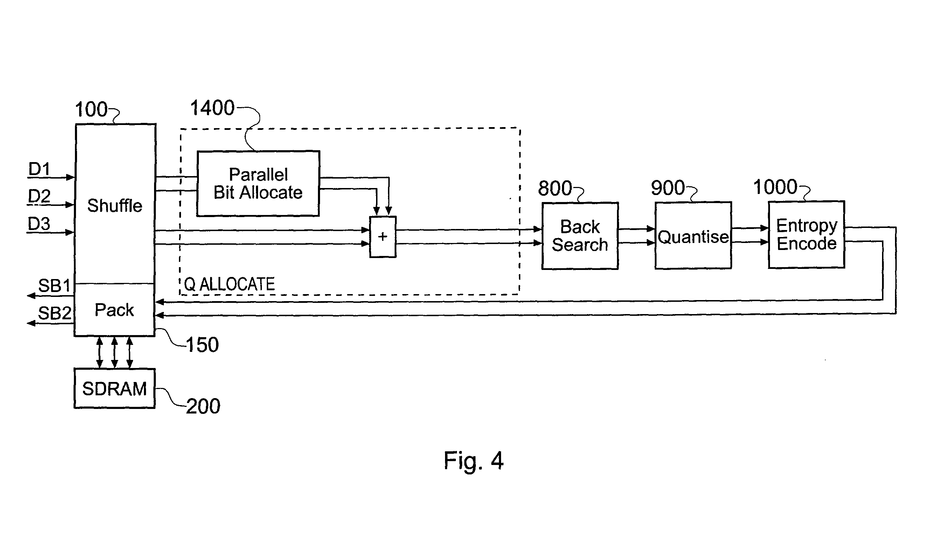

Figure 4 illustrates an alternative form of encoder 10 to that shown in Figure 2. The encoder of Figure 4 is identical to that of Figure 2 with the exception of the Q allocation unit 300. This alternative encoder does not have a binary search module but has a parallel bit allocation module 1400 capable of performing 24 parallel trial quantisations within the full range of 31 $Q_{-SCALE-CODES}$. This offers a high enough resolution within the $Q_{-SCALE}$ range for direct calculation of the value $Q_{-ALLOC}$. The bit allocation module 400 that was used in combination with the binary search module 700 in the encoder of Figure 2 was capable of performing only 4 parallel trial quantisations at a coarse resolution. The appropriate Q_SCALE value was determined to a higher resolution by the binary search module in order to determine the value $Q_{-ALLOC}$. The bit allocation module 400 comprises 4 quantiser unit/entropy encode unit pairs whereas the parallel bit allocation module 1400 comprises 24 quantiser unit/entropy encode unit pairs.

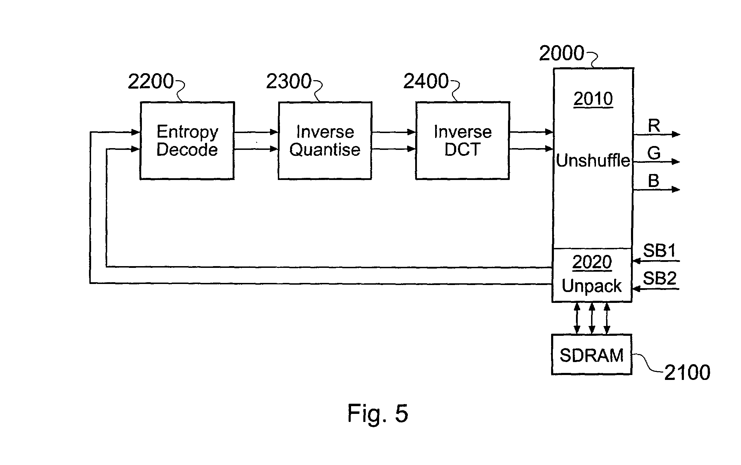

Figure 5 schematically illustrates the decoder 30 of Figure 1. The decoder is operable to reverse the encoding process and comprises an unshuffle unit 2010, an unpack unit 2020, an external SDRAM 2100, an entropy decoding module 2200, an inverse quantiser 2300 and an inverse DCT module 2400. The sync-block data signals SB1 and SB2 that are either read from the recording medium or received across a data transfer network are received by the unpack unit 2020 that implements an unpacking function by writing to and reading from the external SDRAM 2100. The unpacked data is supplied to the entropy decoder that reverses the Huffman coding to recover the quantised coefficients which are supplied to the inverse quantiser 2300. The inverse quantiser 2300 uses information supplied by the encoder 10 about the quantisation divisors and multiplies the quantised coefficients by the appropriate quantisation divisors to obtain an approximation to the original DCT coefficients. This inverse quantisation process does not restore the original precision of the coefficients so quantisation is a "lossy" compression technique. The output from the inverse quantiser 2300 is supplied to the inverse DCT module 2400 that processes each block of frequency domain DCT coefficients using an inverse discrete cosine transform to recover a representation of the image blocks in the spatial domain. The output of the inverse DCT module 2400 will not be identical to the pre-encoded pixel block due to the information lost as a result of the quantisation process. Finally the output of the inverse DCT module 2400 is supplied to the unshuffle unit 2010 where the data is unshuffled to recover the image block ordering of the pre-encoded image. The output of the unshuffle unit 2010 comprises the three colour component video signals RGB from which the image can be reconstructed.

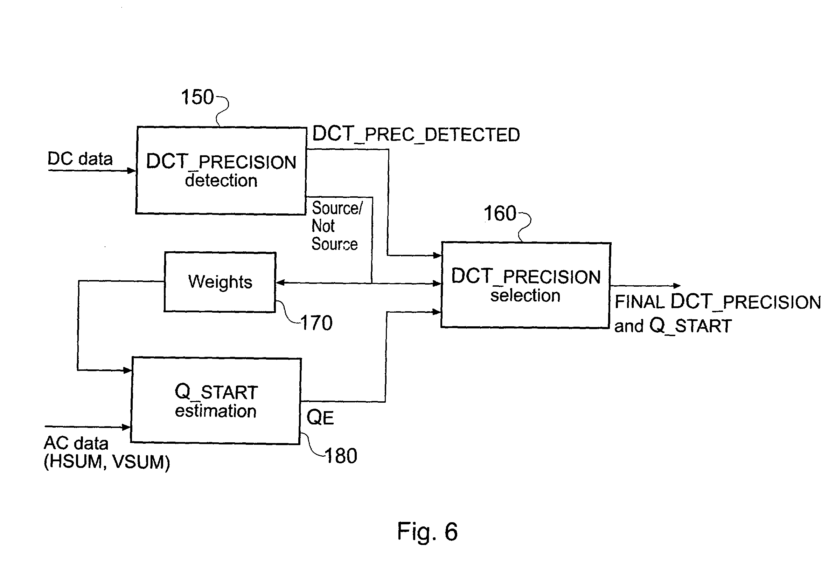

Figure 6 schematically illustrates a parameter estimation circuit according to an embodiment of the invention. This parameter estimation circuit is implemented in the shuffle module 100 of the encoder of Figures 2 and 3. The parameter estimation circuit comprises a DOT$_{-PRECISION}$ detection module 150, a DCT$_{-PRECISION}$ selection module 160, a weights module 170 and a $Q_{-START}$ estimation module 180.

The DCT$_{-PRECISION}$ index has four possible values 0, 1, 2, 3 and is specified on a frame by frame basis. The parameter DCT$_{-SCALER}$ = $2^{DCT_{-PRECISION}}$ is the quantisation divisor associated with DCT$_{-PRECISION}$. During the encoding process it is important to select the most appropriate value for DCT$_{-PRECISION}$ which is set and fixed prior to performing the series of trial quantisations. Furthermore it is necessary to provide an estimate for $Q_{-START}$ which is an estimate of the ideal $Q_{-SCALE}$ for the field or frame at the chosen DCT$_{-PRECISION}$ and it is used to determine the quantisation divisors for the lowest resolution trial quantisations performed by the bit allocation module 400.

The parameter estimation circuit of Figure 6 analyses the input image data to calculate estimates for the DCT$_{-PRECISION}$ and $Q_{-START}$. This circuit also determines whether the video data is "source" data that has not previously undergone an encode/decode cycle or "not source" data that has undergone at least one previous encode/decode cycle. The value of DCT$_{-PRECISION}$ is determined field by field or frame by frame in this embodiment. However, in alternative embodiments, the value of DCT$_{-PRECISION}$ could be calculated for each Macro-Block or for groups of Macro-Blocks.

The DCT$_{-PRECISION}$ detection module 150 determines whether the input video data is source or non-source and, in the case of non-source data, it detects the DCT$_{-PRECISION}$ index that was used in a previous encode/decode cycle. It outputs the value DCT$_{-PREC-DETECTED}$ which is supplied as input to the DCT$_{-PRECISION}$ selection module 160 and further outputs a "source"/ "not source" decision on the input data which is passed on to the weights module 170 and the DCT$_{-PRECISION}$ selection module 160. The weights module 170 supplies weighting factors for the calculation performed by the $Q_{-START}$ estimation module 180. The weighting factors implemented by the weights module 170 depend on whether the video data has been classified as "source" or "not source".

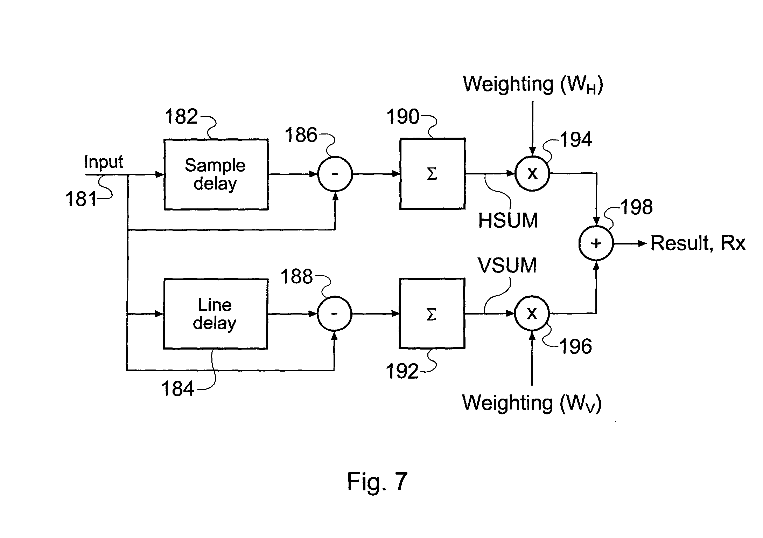

The $Q_{-START}$ estimation module 180 calculates an estimated $Q_{-SCALE}$ value $Q_E$ for each frame/field. $Q_E$ is the estimated ideal $Q_{-SCALE}$ for DCT$_{-PRECISION}$=0 (corresponding to the least harsh quantisation). Figure 7 schematically illustrates a portion of the $Q_{-START}$ estimation module of Figure 6. Figure 7 shows the processing performed on a single video component "X". The results for each channel, of which there are three for RGB mode processing, but two for YC mode processing, are combined to produce the value $Q_E$ for each frame/field. In Figure 7 an input signal 181 for a single video component is supplied both directly and via a sample delay module 182 to a subtractor 186. The subtractor calculates differences between horizontally adjacent pixels and supplies the results to a summing module 190 which calculates the sum of horizontal pixel differences $H_{SUM}$ for the signal component of the input frame/field. The input signal 181 is also supplied to a further subtractor 188, both directly and via a line delay module 184. The subtractor 188 calculates differences between vertically adjacent pixels and supplies the results to a further summing module 192 which calculates the sum of vertical pixel differences VSUM for the signal component of the input frame/field.

The horizontal and vertical pixel differences across Macro-Block boundaries are excluded from $H_{SUM}$ and $V_{SUM}$. Since the data is quantised Macro-Block by Macro-Block, different Macro-Blocks will typically have different quantisation parameters therefore pixel differences across Macro-Block boundaries are irrelevant in estimating how easily the data can be compressed. By excluding pixel differences across Macro-Block boundaries the accuracy of the estimate $Q_E$ can be improved. Pixel differences across DCT block boundaries are also excluded from $H_{SUM}$ and $V_{SUM}$. DCT is performed DCT block by DCT block so the difference between two DCT blocks is never actually encoded. The output $H_{SUM}$ of the summing module 190 is supplied to a multiplier 194 where it is multiplied by a horizontal weighting factor $W_H$. The output $V_{SUM}$ of the summing module 190 is supplied to a multiplier 194 where it is multiplied by a vertical weighting factor $W_V$.

The weighting factors $W_H$ and $W_V$ are supplied to the Q_START estimation module by the weights module 170. In this embodiment of the invention the respective values of $W_H$ and $W_V$ are different for "source data" and for "not source" data. However, in alternative embodiments $W_H$ and $W_V$ are set to the same respective values for "source data" and for "not source" data but the calculated value of $Q_E$ is scaled by a scaling factor dependent on whether or not the image data is source data.

The weighting factors $W_H$ and $W_V$ are selected by performing tests on training images during which the value of Q_START is compared with the "ideal Q" which is the flat quantiser required to compress the image to the required bit rate. The weighting factors $W_H$ and $W_V$ are selected such that the discrepancy between Q_START and the ideal Q is reduced. Different values of the weighting factors $(W_H, W_V)$ are used for each video signal component.

Returning to the circuit of Figure 7, an adder 198 calculates the value $R_X$ for each video component X according to the following formula:

$$R_X = W_H \times H_{SUM} + W_v \times V_{SUM}$$

where X is one of the signal components R, G, B, Y or C. The quantisation divisor estimate $Q_E$ for each field/frame is given by the sum $Q_E = R_R + R_G + R_B$ in RGB mode processing or by the sum $Q_E = R_Y + R_C$ in YC mode processing.

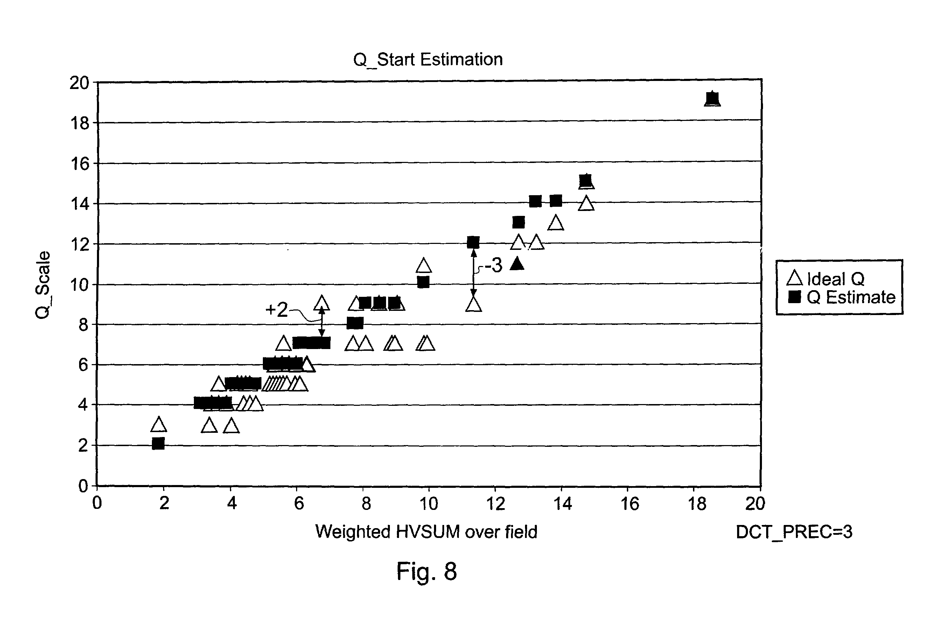

Figure 8 is an example graph of Q_SCALE versus the weighted horizontal and vertical sum $R_X$ for DCT_PRECISION=3. This figure illustrates the discrepancy between the ideal Q and $Q_E$. Such discrepancies are used to provide an error estimate for both $Q_E$ and Q_START which is calculated from $Q_E$. Table 1 below gives an indication of the errors in $Q_E$ and Q_SCALE for each value of DCT_PRECISION. These errors were estimated using the graph of Figure 8. It can be seen from Figure 8 that the minimum / maximum error on Q_SCALE is -3 / +2. Thus an error of -3 / +3 is allowed for at DCT_PRECISION=3 in Table 1. The errors for the other values of DCT_PRECISION scale accordingly, as shown in the table.

Table 1

| DCT_PRECISION | MIN error on $Q_E$ | MAX error On $Q_E$ | MIN error on Q_SCALE | MAX error on Q_SCALE |
| --- | --- | --- | --- | --- |
| 0 (least harsh) | -24 | +24 | -24 | +24 |
| 1 | -24 | +24 | -12 | +12 |
| 2 | -24 | +24 | -6 | +6 |
| 3 (most harsh) | -24 | +24 | -3 | +3 |

The Q_START estimation module 180 supplies the DCT_PRECISION selection circuit 160 with a signal specifying the value of $Q_E$ for each frame/field.

The DCT_PRECISION selection circuit 160 determines a value Q_START for each field or frame in dependence upon $Q_E$. A value of the DCT_PRECISION index is estimated from the numerical value of $Q_E$ as shown in table 2 below. Recall that the quantisation Q(AC) of the AC coefficients involves division by the product of factors Q_SCALE*NORM_ACT*DCT_SCALER where DCT_SCALER$=2^{DCT\_PRECISION}$. It follows that for "activity off" (NORM_ACT = 1) the Q_SCALE value Q_START is given by $Q_E$/DCT_SCALER. However, even with "activity on" NORM_ACT should average to 1 across a field/frame so that it should have no effect on the accuracy of the Q_START estimate. Table 3 below shows the corresponding relationship between $Q_E$ and Q_START for "activity on". In this case the factor NORM_ACT lies is in the range 0.5 to 2.0 and must be taken into account to avoid selection of $Q_{-START}$ values outside the allowable range of $Q_{-SCALE}$. $Q_E$ is an estimate for Q_SCALE*DCT_SCALER from the denominator of Q(AC) so that Q_START corresponds to Q_SCALE.

Table 2:

| DCT_**PRECISION** Selection (Activity Off) | | | |
|---|---|---|---|
| Estimated Quantiser, $Q_E$ | $Q_{-SCALE-TYPE}$ | $DCT_{-PRECISION}$ | $Q_{-START}$ |
| $Q_E$ <= 38 | Linear | 0 | $Q_E$ |
| 38 < $Q_E$ <= 100 | Linear | 1 | $Q_E$ /2 |
| 100 < $Q_E$ <= 224 | Linear | 2 | $Q_E$ /4 |
| 224 < $Q_E$ <= 464 | Linear | 3 | $Q_E$ /8 |
| 464 < $Q_E$ | non-linear | 3 | $Q_E$ /8 |

Table 3:

| DCT_**PRECISION** Selection (Activity On: 0.5-2) | | | |
|---|---|---|---|
| Estimated Quantiser, $Q_E$ | $Q_{-SCALE-TYPE}$ | $DCT_{-PRECISION}$ | $Q_{-START}$ |
| $Q_E$ <= 36 | Linear | 1 | $Q_E$ /2 |
| 36 < $Q_E$ <= 96 | Linear | 2 | $Q_E$ /4 |
| 96 < $Q_E$ <= 208 | Linear | 3 | $Q_E$ /8 |
| 208 < $Q_E$ | non-linear | 3 | $Q_E$ /8 |

The $Q_{-SCALE-TYPE}$ in the second column of Table 2 and Table 3 specifies whether the values associated with the 31 available $Q_{-SCALE-CODES}$ represent a linear sequence or a non-linear sequence. As shown in the table of Figure 3, the non-linear sequence extends to quantisation divisors of larger magnitude than those of the linear sequence.

The reasoning used to determine the appropriate range of $Q_E$ corresponding to each value of $DCT_{-PRECISION}$ in Table 2 and in Table 3 will now be described in detail.

First consider Table 2 which corresponds to "activity off" mode. Using the linear $Q_{-SCALE-TYPE}$ of the table in Figure 3, it can be seen that the maximum $Q_{-SCALE}$ available is 62.

At $DCT_{-PRECISION}$=0 there is an estimated error of $\pm24$ on $Q_{-START}$. Therefore, to allow for this possible error, $DCT_{-PRECISION}$=0 is not chosen unless $Q_{-START} \leq 38$ (=62-24). This means that if the error on $Q_{-START}$ really is -24 and the real $Q_{-SCALE}$ required is 62 then this can still be achieved at the chosen $DCT_{-PRECISION}$ (0). Since at $DCT_{-PRECISION}$=0, $Q_{-START}=Q_E$, the value $DCT_{-PRECISION}$=0 is chosen if QE $\leq$ 38.

At $DCT_{-PRECISION}$=1, there is an estimated error of $\pm12$ on $Q_{-START}$. Therefore, to allow for this possible error, $DCT_{-PRECISION}$=1 should not be chosen unless $Q_{-START} \leq 50$ (=62-12). Since at $DCT_{-PRECISION}$=1, $Q_{-START}=Q_E$/2, it follows that the value $DCT_{-PRECISION}$=1 is chosen if $Q_E \leq$ 100 (50*2).

At $DCT_{-PRECTSION}$=2 there is an estimated error of $\pm6$ on $Q_{-START}$. Therefore, to allow for this possible error, $DCT_{-PRECISION}$=2 should not be chosen unless $Q_{-START} \leq 56$ (=62-6). Since at $DCT_{-PRECISION}$=2, $Q_{-START}=Q_E$/4, it follows that the value $DCT_{-PRECISION}$=2 is chosen if $Q_E \leq$ 224 (56*4).

At $DCT_{-PRECISION}$=3 there is an estimated error of $\pm3$ on $Q_{-START}$. Therefore, to allow for this possible error, $DCT_{-PRECISION}$=3 should not be chosen unless $Q_{-START} \leq 58$ (=62-3, rounded down to nearest $Q_{-SCALE}$ allowed). Since at $DCT_{-PRECISION}$=3, $Q_{-START}=Q_E$/8, it follows that the value $DCT_{-PRECISION}$=3 is chosen if $Q_E \leq$ 464 (58*8).

Otherwise the non-linear Q_SCALE_TYPE must be chosen at $DCT_{-PRECISION}$=3 to allow more harsh quantisation.

Now consider Table 3 which corresponds to "activity on" mode. As for Table 2, referring to the linear $Q_{-SCALE-TYPE}$ of the table in Figure 3, it can be seen that the maximum $Q_{-SCALE}$ available is 62. For "activity on" this is actually the maximum value for the product $Q_{-SCALE}$*$NORM_{-ACT}$, since this value is turned into a $Q_{-SCALE-CODE}$ before being applied.

$NORM_{-ACT}$ has a range of x0.5 to x2 which must be taken account of for activity on. Therefore, to allow for the possible x2 effect of $NORM_{-ACT}$, the maximum value of $Q_{-SCALE}$ is taken to be 30, (note from Figure 3 that a $Q_{-SCALE}$ of 31 is not allowed).

At $DCT_{-PRECISION}$=0 there is an estimated error of $\pm24$ on $Q_{-START}$. Therefore, to allow for this possible error, DCT$_{\_PRECISION}$=0 should not be chosen unless Q$_{\_START}$ ≤ 6 (=30-24). However, 6 is below the minimum allowable Q$_{\_SCALE}$ of 8 at DCT$_{\_PRECISION}$=0. It follows that the value DCT$_{\_PRECISION}$=0 cannot be chosen with activity on.

At DCT$_{\_PRECISION}$=1 there is an estimated error of ±12 on Q$_{\_START}$. Therefore, to allow for this possible error, DCT$_{\_PRECISION}$=1 should not be chosen unless Q$_{\_START}$ ≤ 18 (=30-12). Since at DCT$_{\_PRECISION}$=1, Q$_{\_START}$=Q$_E$/2, it follows that the value DCT$_{\_PRECISION}$=1 is chosen if Q$_E$ ≤ 36 (18*2).

At DCT$_{\_PRECISION}$=2, there is an estimated error of ±6 on Q_START. Therefore, to allow for this possible error, DCT$_{\_PRECISION}$=2 should not be chosen unless Q$_{\_START}$ ≤ 24 (=30-6). Since at DOT$_{\_PRECISION}$=2, Q$_{\_START}$=Q$_E$/4, it follows that the value DCT$_{\_PRECISION}$=2 is chosen if Q$_E$ ≤ 96 (24*4).

At DCT$_{\_PRECISION}$=3, there is an estimated error of ±3 on Q$_{\_START}$. Therefore, to allow for this possible error, DCT$_{\_PRECISION}$=3 should not be chosen unless Q$_{\_START}$ ≤ 26 (=30-3, rounded down to nearest Q$_{\_SCALE}$ allowed). Since at DCT$_{\_PRECISION}$=3, Q$_{\_START}$=Q$_E$/8, it follows that the value DCT$_{\_PRECISION}$=3 is chosen if Q$_E$ ≤ 208 (26*8).

Otherwise, the non-linear Q$_{\_SCALE\_TYPE}$ must be chosen at DCT$_{\_PRECISION}$=3 to allow harsher quantisation.

For input images categorised as "not source" the parameter estimation circuit calculates two separate estimates for the estimated value of DCT$_{\_PRECISION}$ corresponding to a previous encode/decode cycle. The first estimate for DCT$_{\_PRECISION}$ corresponds to the value DCT$_{\_PREC\_DETECTED}$ as calculated by the DCT$_{\_PRECISION}$ detection module 150. The second estimate for DCT$_{\_PRECISION}$ is obtained from the parameter Q$_E$ that was calculated from sums of horizontal and vertical pixel differences H$_{SUM}$ and V$_{SUM}$. We shall refer to this second estimate as DCT$_{\_PREC\_Q_E}$. The values DCT$_{\_PREC\_Q_E}$ and DCT$_{\_PREC\_DETECTED}$ may indicate different decisions for the most appropriate value of DCT$_{\_PRECISION}$. If the two estimated values are not in agreement then a logical decision must be made to determine the final DCT$_{\_PRECISION}$ value.

It is considered that when the value of Q$_E$ used to determine DCT$_{\_PREC\_Q_E}$ is "close" to a boundary of one of the Q$_E$ ranges as defined in the first column of Table 1 (for activity off) or Table 2 (for activity on) then DCT$_{\_PREC\_DETECTED}$ is considered to be more reliable than DCT$_{\_PREC\_Q_E}$. In determining whether or not Q$_E$ is close to the boundary account is taken of the likely errors in the Q$_{\_SCALE}$ estimate Q$_E$.

Q$_E$ is determined for each field/frame and is subject to two main types of variation. The variation in Q$_E$ from frame to frame in an image sequence is termed "sequence jitter" whereas the variation in Q$_E$ for a given image frame from one generation to the next is termed "generation jitter". Image quality can be improved if the DCT$_{\_PRECISION}$ values are stabilised such that jitter is reduced. In the present embodiment when determining the final DCT$_{\_PRECISION}$ from DCT$_{\_PREC\_DETECTED}$ and DCT$_{\_PREC\_Q_E}$, allowance is made for generation jitter Note that although DCT$_{\_PREC\_DETECTED}$ is taken into account, it may still be necessary to select a different DCT$_{\_PRECISION}$ from one generation to the next in circumstances where the required bit rates of the previous and current encoding differ considerably. In general, the required bit rates corresponding to previous encode/decode cycles will not be available during the current encoding process.

The final values of DCT$_{\_PRECISION}$ and Q$_{\_START}$ are determined for non-source images in dependence upon a comparison between DCT$_{\_PREC\_DETECTED}$ and DCT$_{\_PREC\_Q_E}$. The comparison takes into account empirically determined values of maximum possible positive jitter J$_{\_}$$^{max}$ and minimum possible negative jitter J$_{\_}$$^{max}$, which for this embodiment, are both set equal to 5.

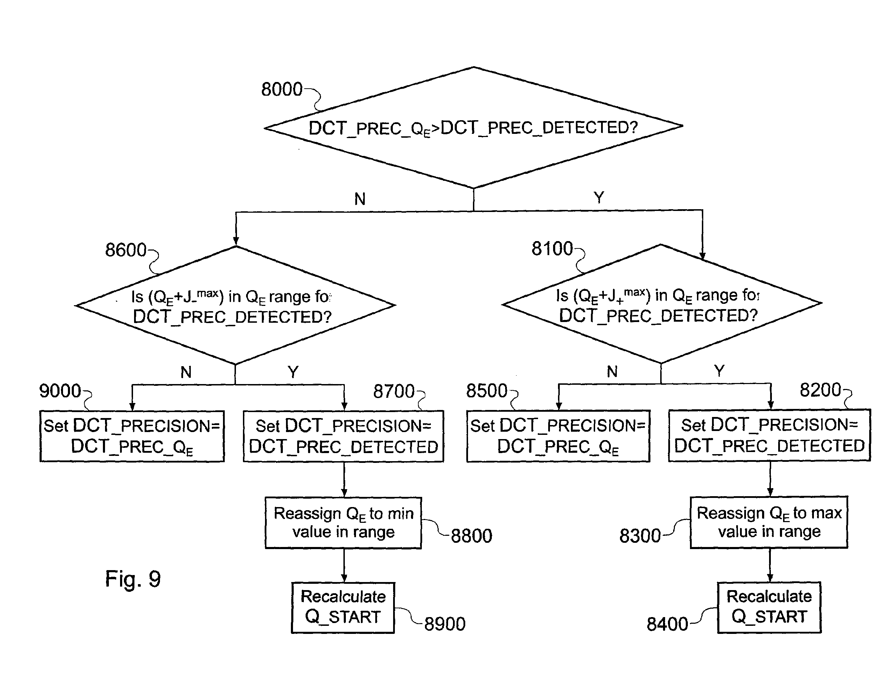

Figure 9 is a flow chart illustrating how the final values of DCT$_{\_PRECISION}$ and Q$_{\_START}$ are selected. First consider the effects of positive jitter. If $DCT_{\_PREC\_Q_E} > DCT_{\_PREC\_DETECTED}$ at step 8000 we proceed to step 8100 and if the value of Q$_E$ minus J$_+$$^{max}$ lies in the Q$_E$ range corresponding to DCT$_{\_PRECISION}$= DCT$_{\_PREC\_DETECTED}$ in the third column of Table 1 or Table 2 above, then we proceed to step 8200 where the final value of DCT$_{\_PRECISION}$ is set equal to DCT$_{\_PREC\_DETECTED}$. Next, at step 8300 the value of Q$_E$ is reassigned such that it corresponds to the maximum possible value within the Q$_E$ range (from Table 1 or 2) associated with DCT$_{\_PREC\_DETECTED}$. Effectively the final value of Q$_E$ is shifted such that it falls within the Q$_E$ range corresponding to the final DCT$_{\_PRECISION}$. This shift is in accordance with the predicted error in the value of the initially determined value of Q$_E$. After reassigning Q$_E$ at step 8300 we proceed to step 8400 where the value of Q$_{\_START}$ is recalculated in accordance with the fourth column of Table 1 or 2 so that it is appropriate to the reassigned value of Q$_E$.

If on the other hand at step 8100 the value of Q$_E$ minus J$_+$$^{max}$ lies outside the Q$_E$ range corresponding to DOT$_{\_PRECISION}$= DCT$_{\_PREC\_DETECTED}$ in the third column of Table 2 or Table 3 above, we proceed to step 8500 where the final value of DCT_PRECISION is set equal to DCT$_{\_PREC\_Q_E}$. The value of Q$_{\_START}$ is not reassigned in this case.

Next consider the effects of negative jitter. If at step 8000 $DCT_{\_PREC\_Q_E} < DCT_{\_PREC\_DETECTED}$ we proceed to step 8600 and if the value of Q$_E$ plus J$_{\_}$$^{max}$ lies in the Q$_E$ range corresponding to DOT$_{\_PRECISION}$ = DCT$_{\_PREC\_DETECTED}$ in the third column of Table 2 or Table 3 above, then we further proceed to step 8700 where the final value of DOT$_{\_PRECISION}$ is set equal to DCT$_{\_PREC\_DETECTED}$. From step 8700 we proceed to step 8800 where the value of Q$_E$ is reassigned such that it corresponds to the minimum possible value within the Q$_E$ range (from Table 2 or 3) associated with DCT$_{\_PREC\_DETECTED}$. Effectively the final value of Q$_E$ is shifted such that it falls within the Q$_E$ range corresponding to the final DCT$_{\_PRECISION}$. This shift is in accordance with the predicted error in the initially determined value of Q$_E$. After reassigning Q$_E$ at step 8800 we proceed to step 8900 where value of Q$_{\_START}$ is recalculated from the fourth column of Table 2 or 3, from the reassigned value of $Q_E$. If on the other hand, at step 8600 the value of $Q_E$ plus J $\_^{max}$ lies outside the $Q_E$ range corresponding to $DCT_{-PRECISION}$ = $DCT_{-PREC-DETECTED}$ in the third column of Table 2 or Table 3 above, then we proceed to step 9000 where the final value of $DCT_{-PRECISION}$ is set equal to $DCT_{-PREC-QE}$. In this case the value of $Q_{-START}$ is not reassigned.

The $DCT_{-PRECISION}$ selection module 160 in Figure 5 outputs the final values of $DCT_{-PRECISION}$ and $Q_{-START}$ to the bit allocation module 400 of Figure 2.

The $DCT_{-PRECISION}$ selection module 160 of the parameter estimation circuit of Figure 6 also performs scene change detection. To determine whether or not a scene change has occurred the current values of $Q_E$ and $DCT_{-PRECISION}$ are compared to the corresponding values for the previous field or frame. In order to perform the comparison the previous field or frame's $Q_{-START}$ value is converted back to a $Q_E$ value according to the following algorithm:

If DCT _precision=0, $Q_E$ = $Q_{-START}$
Else if $DCT_{-PRECISION}$=1, $Q_E$ = $Q_{-START}$*2
Else if $DCT_{-PRECISION}$=2, $Q_E$ = $Q_{-START}$*4
Else if $DCT_{-PRECISION}$=3, $Q_E$ = $Q_{-START}$*8

The **final** $Q_E$ value assigned to the current field/frame is then compared to the QE of the previous field /frame as follows:

If |current $Q_E$ - previous $Q_E$| > $th_{sc}$ then SCENE CHANGE detected
Else              NO SCENE CHANGE detected

where $th_{sc}$ is a predetermined scene change threshold. The scene change detection result is supplied as input to the bit allocation module 400 where it is used to determine how the activity value $NORM_{-ACT}$ is normalised.

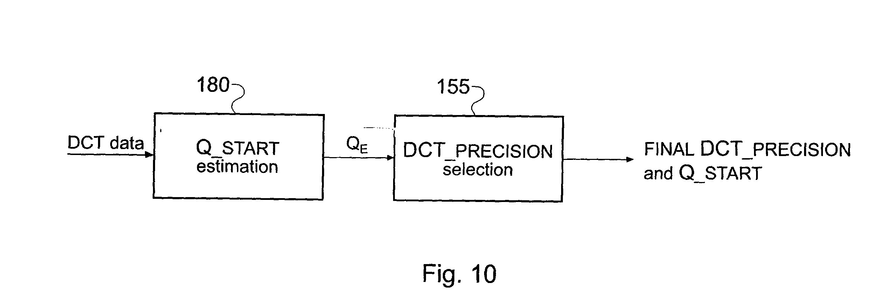

Figure 10 schematically illustrates an alternative embodiment of the parameter estimation circuit of Figure 6. This alternative embodiment comprises the $Q_{-START}$ estimation module 180 and the $DCT_{-PRECISION}$ selection module 155. It *does not* comprise a $DCT_{-PRECISION}$ detection module but simply selects an appropriate value of $DCT_{-PRECISION}$ from the $Q_{-SCALE}$ parameter $Q_E$.

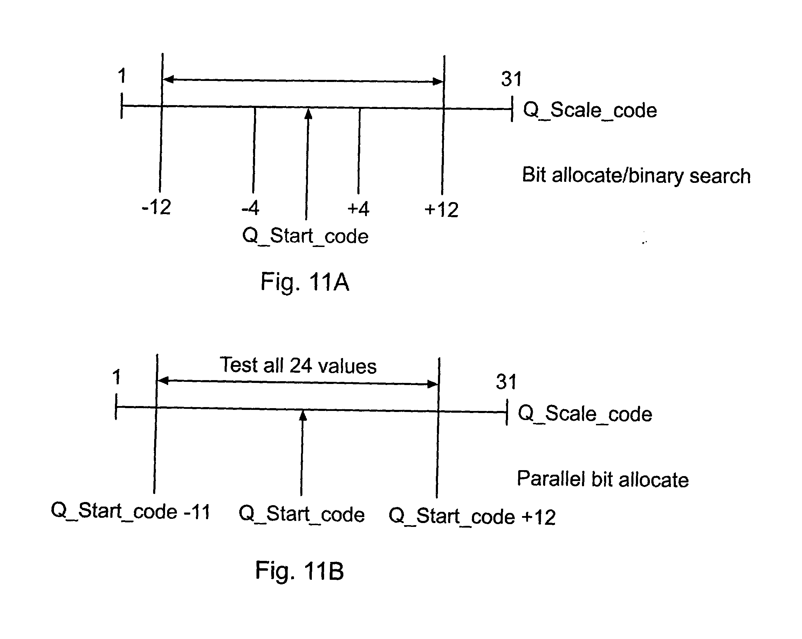

Figure 11A schematically illustrates how the $Q_{-START}$ value calculated by the parameter estimation circuit of Figure 6 is used to determine the trial quantisation divisors used by the binary search bit allocation module 400. The $Q_{-SCALE-CODE} \equiv Q_{-START-CODE}$ corresponding to $Q_{-SCALE}=Q_{-START}$ defines the centre of the range of $Q_{-SCALE-CODE}$ values tested during the trial quantisations. In particular the four $Q_{-SCALE-CODE}$ values tested are {$Q_{-START-CODE}$-12, $Q_{-START-CODE}$-4, $Q_{-START-CODE}$+4, $Q_{-START-CODE}$ + 12}.

Figure 11B schematically illustrates how the $Q_{-START}$ value calculated by the parameter estimation circuit of Figure 6 is used to determine the trial quantisation divisors used by the parallel Q allocation module 1400 of Figure 4. The $Q_{-SCALE-CODE}$ = $Q_{-START-CODE}$ corresponding to $Q_{-SCALE}=Q_{-START}$ defines the centre of the $Q_{-SCALE-CODE}$ values tested and all 24 $Q_{-SCALE-CODE}$ values from $Q_{-START-CODE}$-11 up to $Q_{-START-CODE}$+12 are tested in this case. Note that a full scan of the available $Q_{-SCALE-CODE}$s would involve 31 trial quantisations but the parameter $Q_{-START}$ has allowed us to reduce this to 24 trial quantisations.

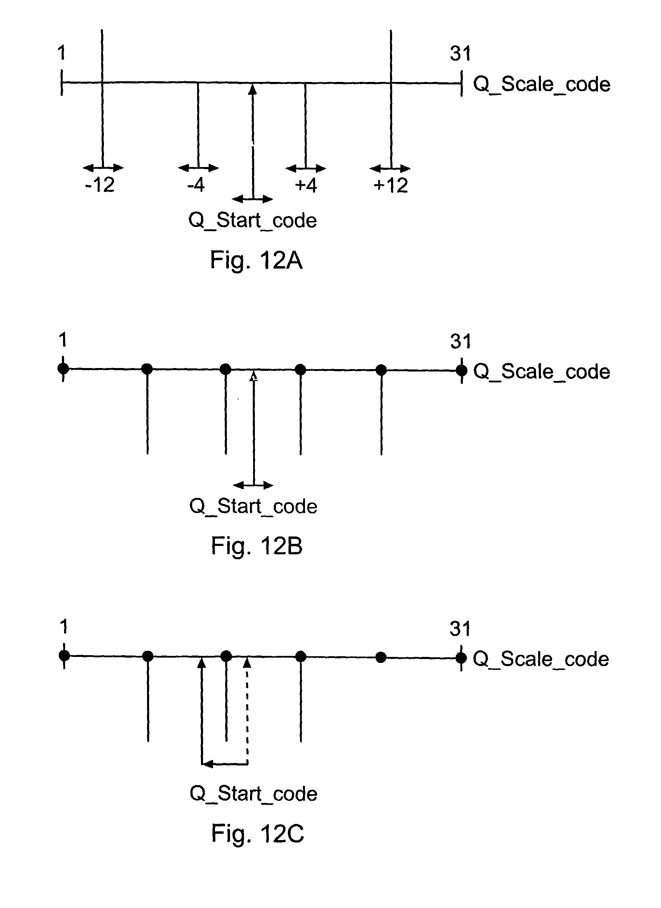

Figure 12 schematically illustrates how $Q_{-START}$ is used to define the $Q_{-SCALE-CODE}$s for the bit allocation process in the case where a predetermined set of $Q_{-SCALE-CODE}$s is used. Figure 12A illustrates the situation where $Q_{-START-CODE}$ defines the centre of the range of selected $Q_{-SCALE-CODE}$s. In this case a change in the value of $Q_{-START-CODE}$ would result in a change in all 4 selected $Q_{-SCALE-CODE}$s. Figure 12B shows that $Q_{-START-CODE}$ is used to determine which set of a range of fixed and equally spaced $Q_{-SCALE-CODE}$s are selected for bit allocation. In this case 4 $Q_{-SCALE-CODE}$s are selected so that the central two $Q_{-SCALE-CODE}$s straddle the $Q_{-START-CODE}$. Figure 12C illustrates that when $Q_{-START-CODE}$ shifts in value e.g. from one generation to the next or one image frame to the next, then 3 of the 4 selected $Q_{-SCALE-CODE}$s remain the same as those selected in Figure 12B.

**Claims**

**1.** A data compression apparatus operable to perform at least one trial quantisation in order to compress input data in accordance with a predetermined target output data quantity, the apparatus comprising:

a quantisation starting point estimator for detecting, from a property of the input data, a quantisation starting point representing an approximate value for a quantisation parameter suitable for achieving the predetermined target output data quantity;

one or more trial quantisers, each testing a degree of quantisation of at least part of the input data, the degree of quantisation being defined by a respective trial quantisation parameter;

a parameter controller for assigning a value of the trial quantisation parameter to each of the trial quantisers in dependence upon the quantisation starting point; and

a parameter selector for selecting a final level of quantisation for use in compression of the input data in accordance with results of the testing performed by the one or more trial quantisers, to ensure that the target output data quantity is not exceeded.

2. Apparatus according to claim 1, in which the input data represents one or more images.

3. Apparatus according to claim 2, in which the quantisation starting point estimator is operable to determine the quantisation starting point from a weighted sum of pixel differences in the input data.

4. Apparatus according to claim 3, in which the quantisation starting point estimator is operable to calculate a weighted sum of differences comprising a horizontal sum formed from at least one difference between horizontally adjacent pixel values and a vertical sum formed from at least one difference between vertically adjacent pixel values, wherein the horizontal sum is performed using a horizontal weighting factor and the vertical sum is performed using a vertical weighting factor.

5. Apparatus according to claim 4, in which the horizontal and vertical weighting factors are different.

6. Apparatus according to claim 4 or claim 5, in which different horizontal and vertical weighting factors are used for different input image signal components.

7. Apparatus according to claim 4, claim 5 or claim 6, comprising a source detection arrangement for detecting whether the input data has undergone a previous compression/decompression cycle.

8. Apparatus according to claim 7, wherein the at least one weighting factor depends on the detection of whether the input data has undergone a previous compression/decompression cycle.

9. Apparatus according to any one of claims 2 to 8, in which said quantisation starting point estimator is operable to determine the quantisation starting point in dependence upon an activity measure of the image or a portion thereof.

10. Apparatus according to any one of claims 3 to 9, in which the input image data is compressed as a plurality of image regions.

11. Apparatus according to claim 10, wherein the quantisation starting point estimator is operable to exclude from the weighted sum those pixel difference values representing a difference between pixels in different image regions.

12. Apparatus according to any one of claims 2 to 11, comprising scene change detection means for detecting a scene change by comparing a difference between the values of the quantisation starting point for consecutive images with a predetermined threshold.

13. A method of data compression in which at least one trial quantisation is performed in order to compress input data in accordance with a predetermined target output data quantity, the method comprising the steps of:

detecting, from a property of the input data, a quantisation starting point representing an approximate value for a quantisation parameter suitable for achieving the predetermined target output data quantity;

testing one or more degrees of quantisation of at least part of the input data, the degrees of quantisation being defined by a respective trial quantisation parameter;

assigning a value of the trial quantisation parameters in dependence upon the quantisation starting point; and selecting a final level of quantisation for use in compression of the input data in accordance with results of the testing performed by the one or more trial quantisers, to ensure that the target output data quantity is not exceeded.

14. Computer software having program code for carrying out a method according to claim 13.

15. A data providing medium by which computer software according to claim 14 is provided.

**16.** A medium according to claim 15, the medium being a transmission medium.

**17.** A medium according to claim 15, the medium being a storage medium.

Fig. 1

EP 1 351 517 A2

Fig. 2

| Q_SCALE_CODE | Q_SCALE | |
| --- | --- | --- |
| | Q_SCALE_TYPE=0 (Linear Quantiser) | Q_SCALE_TYPE=1 (Non-Linear Quantiser) |
| 1 | 2 | 1 |
| 2 | 4 | 2 |
| 3 | 6 | 3 |
| 4 | 8 | 4 |
| 5 | 10 | 5 |
| 6 | 12 | 6 |
| 7 | 14 | 7 |
| 8 | 16 | 8 |
| 9 | 18 | 10 |
| 10 | 20 | 12 |
| 11 | 22 | 14 |
| 12 | 24 | 16 |
| 13 | 26 | 18 |
| 14 | 28 | 20 |
| 15 | 30 | 22 |
| 16 | 32 | 24 |
| 17 | 34 | 28 |
| 18 | 36 | 32 |
| 19 | 38 | 36 |
| 20 | 40 | 40 |
| 21 | 42 | 44 |
| 22 | 44 | 48 |
| 23 | 46 | 52 |
| 24 | 48 | 56 |
| 25 | 50 | 64 |
| 26 | 52 | 72 |
| 27 | 54 | 80 |
| 28 | 56 | 88 |
| 29 | 58 | 96 |
| 30 | 60 | 104 |
| 31 | 62 | 112 |

Fig. 3

Fig. 4

EP 1 351 517 A2

Fig. 5

Fig. 6

Fig. 7

EP 1 351 517 A2

Fig. 8

EP 1 351 517 A2

8000 — DCT_PREC_$Q_E$>DCT_PREC_DETECTED?

N

Y

8600 — Is ($Q_E$+$J_-^{max}$) in $Q_E$ range for DCT_PREC_DETECTED?

N

Y

8100 — Is ($Q_E$+$J_+^{max}$) in $Q_E$ range for DCT_PREC_DETECTED?

N

Y

9000 — Set DCT_PRECISION= DCT_PREC_$Q_E$

8700 — Set DCT_PRECISION= DCT_PREC_DETECTED

8500 — Set DCT_PRECISION= DCT_PREC_$Q_E$

8200 — Set DCT_PRECISION= DCT_PREC_DETECTED

Reassign $Q_E$ to min value in range —8800

Reassign $Q_E$ to max value in range — 8300

Recalculate Q_START —8900

Recalculate Q_START — 8400

Fig. 9

DCT data → | 180 ⌐<br>Q_START<br>estimation | →$Q_E$→ | 155 ⌐<br>DCT_PRECISION<br>selection | → FINAL DCT_PRECISION<br>and Q_START

Fig. 10

31
+12
+4
-4
-12
1
Q_Scale_code
Q_Start_code
Bit allocate/binary search

Fig. 11A

31
+12
1
Q_Scale_code
Test all 24 values
Q_Start_code -11
Q_Start_code
Q_Start_code +12
Parallel bit allocate

Fig. 11B

Fig. 12A

Fig. 12B

Fig. 12C